Europäisches Patentamt

European Patent Office

Office européen des brevets

(19)

(11) Publication number: **0 037 587**

**B1**

(12) **EUROPEAN PATENT SPECIFICATION**

(45) Date of publication of patent specification: 07.12.83

(51) Int. Cl.³: **B 62 D 25/02**

(21) Application number: 81102668.1

(22) Date of filing: 08.04.81

(54) Vehicle sill structure.

(30) Priority: 08.04.80 JP 45828/80

(43) Date of publication of application:
14.10.81 Bulletin 81/41

(45) Publication of the grant of the patent:
07.12.83 Bulletin 83/49

(84) Designated Contracting States:
DE FR GB

(56) References cited:
FR - A - 2 265 566
GB - A - 1 246 995
GB - A - 1 405 033
US - A - 2 218 814
US - A - 2 833 589

Bussien: "Automobiltechnisches Handbuch", 2.
Band, Technischer Verlag Herbert Cram, Berlin
1965, page 858, paragraph 2

(73) Proprietor: NISSAN MOTOR COMPANY, LIMITED
No.2, Takara-cho, Kanagawa-ku
Yokohama-shi Kanagawa-ken 221 (JP)

(72) Inventor: Hagiwara, Taro
No. 714, Nishiterao-cho
Kanagawa-ku Yokohama City (JP)

(74) Representative: Patentanwälte TER MEER -
MÜLLER - STEINMEISTER
Triftstrasse 4
D-8000 München 22 (DE)

Vehicle sill structure

The present invention relates to a process for producing a closed sill configuration for a vehicle body and to such a sill configuration comprising a weatherstrip mounted on a pivotal vehicle door.

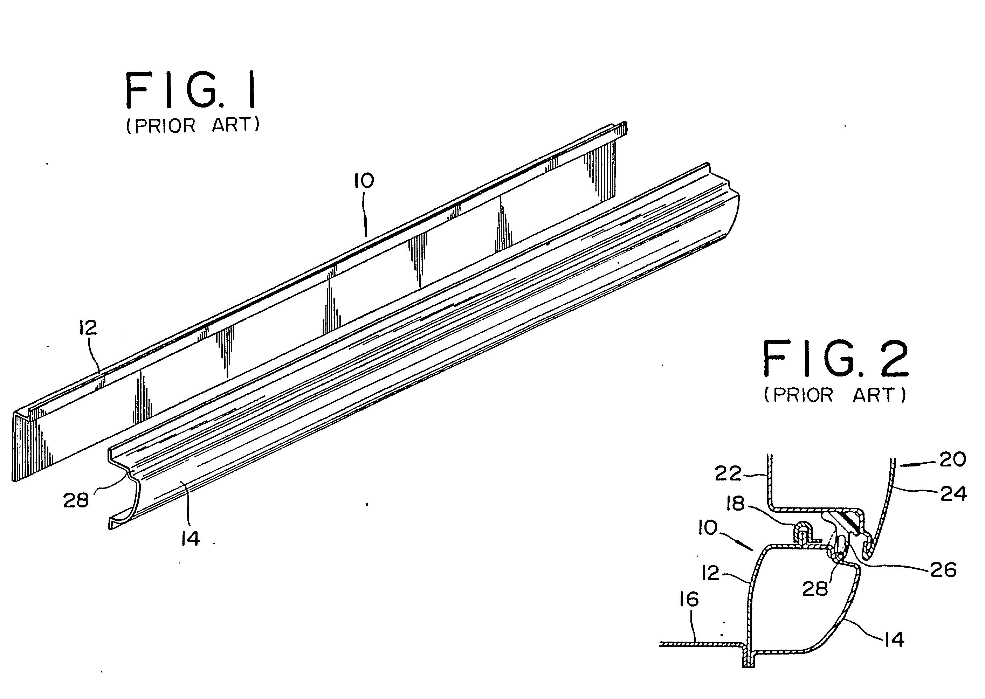

In Figs. 1 and 2, a typical sill 10 of a vehicle body is shown which is formed from a side sill inner panel 12 and a side sill outer panel 14. The side sill panels are joined together at their respective upper and lower edges to define a hollow or closed sill configuration, i.e., the sill is of a closed section. The sill 10 is attached to a lateral end of a floor panel 16. A welt 18 is disposed in a manner to cover the joined upper edges of the side sill panels 12 and 14. A door 20 is shown to comprise a door inner panel 22 and a door outer panel 24, and a weatherstrip 26 of resilient material is mounted in the lower end section of the door 20 in a manner to contact a sealing surface 28 of the side sill outer panel 14 to provide a seal between the sill 10 and the door 20 when the door is closed.

The sill structure described above has the disadvantage that it is impossible or at least difficult to assuredly apply a coating on the interior surfaces of the side sill panels when the body is processed by electrodeposition painting since the sill is of a closed section.

In order to protect the sill against corrosion, it is thus necessary to treat the sill by, for example, applying a rust-proof oil on the interior surfaces of the side sill panels after the process of electrodeposition painting of the vehicle body. This inevitably results in increased manufacturing costs.

It is an object of the present invention to provide a process for producing a closed sill configuration, whereby a corrosion-resistant coating is assuredly and easily applied to both side surfaces of the sill and the corrosion-resistant quality of the sill is improved. It is also an object of the invention to provide a closed sill configuration for a vehicle body comprising a weatherstrip mounted on a pivotal vehicle door.

The process according to the present invention is characterized by the steps of
— shaping the sill as a laterally outwardly open section,
— applying a coating to the surfaces of the sill by electrodeposition painting, and
— applying a sill cover being attached removably to the sill in a manner to define a closed sill configuration. The closed sill configuration according to the invention is characterized in that said sill is of a downwardly and laterally outwardly open angle-like section and includes a first upstanding wall section attached at the lower end thereof to a lateral end of the floor panel of the vehicle and a second upstanding wall section spaced laterally outwardly from said first upstanding wall section and forming a sealing surface for said weatherstrip, a cover being removably attached to the sill.

The present invention enables to assuredly and easily apply a corrosion-resistant coating to both side surfaces of the sill by electrodeposition painting, thereby eliminating the necessity of treating the sill by applying a rust-proof oil or the like.

The features and advantages of the vehicle body according to the present invention will become clearly appreciated from the following description taken in conjunction with the accompanying drawings, in which:

Fig. 1 is an exploded, perspective view of a sill of a prior art vehicle body with which the present invention is concerned;

Fig. 2 is a cross sectional view of the sill of Fig. 1 and its adjacent parts;

Fig. 3 is a perspective of a sill configuration according to an embodiment of the present invention;

Fig. 4 is a cross sectional view of the sill configuration of Fig. 3; and

Fig. 5 is an exploded, perspective view of the sill configuration of Fig. 3.

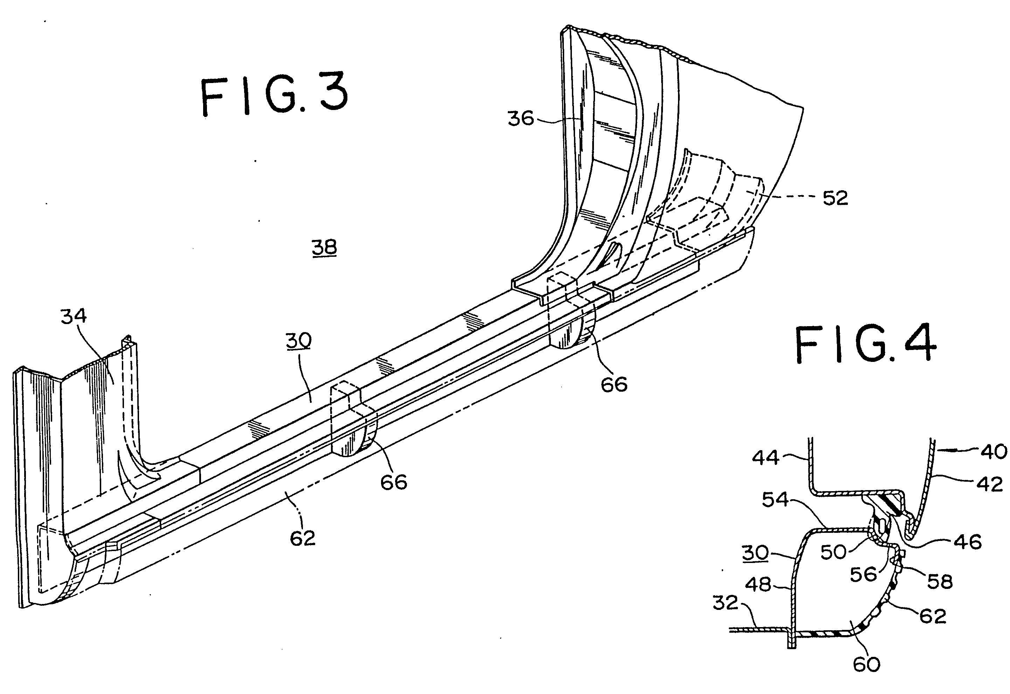

Referring to Figs. 3 to 5, inclusive, a vehicle body according to the present invention is shown to comprise a sill 30 which is disposed along a lateral extremity of a floor panel 32 and longitudinally extends between a front pillar 34 and a rear fender 36 (see Fig. 3). The sill 30 is an open section, one-piece member made of steel and forms a lower side of a door opening 38. A door 40 is shown in Fig. 4 as formed from outer and inner door panels 42 and 44 and hingedly or pivotally mounted at the front end thereof to the front pillar 34 to open and close the door opening 38. A weatherstrip 46 of a resilient material is mounted on the door 40 to provide a seal between the door and the sill.

In the foregoing structure, it is to be noted that according to the present invention the sill 30 is an open section, one-piece member. More specifically, the sill 30 is of a downwardly and laterally outwardly open angle-like section and includes a first upstanding wall section 48 and a second upstanding wall section 50 spaced laterally outwardly from the first upstanding wall section. The first upstanding wall section 48 is welded or otherwise attached at the lower end thereof to a flanged lateral end of the floor panel 32. In this connection, the sill 30 is further welded or otherwise attached at the front end thereof to the front pillar 34 and at the rear end thereof to the rear fender 36 and a rear fender protector 52. The second upstanding wall section 50 slightly descends laterally outwardly and forms a sealing surface for containing the weatherstrip 46. The sill 30 further includes a substantially horizontal wall section 54 interconnecting the upper ends of the first and second upstanding wall sections 48 and 50 and a free end wall section 56 extending laterally outwardly, in a slightly descending manner, from the lower end of the second upstanding wall section 50 to terminate a downwardly turned, short flange 58 depending slightly inwardly. With the foregoing shape, the sill 30 thus has an opening 60 extending throughout the length thereof.

For aesthetic purposes, concealing means is used in the illustrated embodiments for concealing the opening 60 of the sill 30.

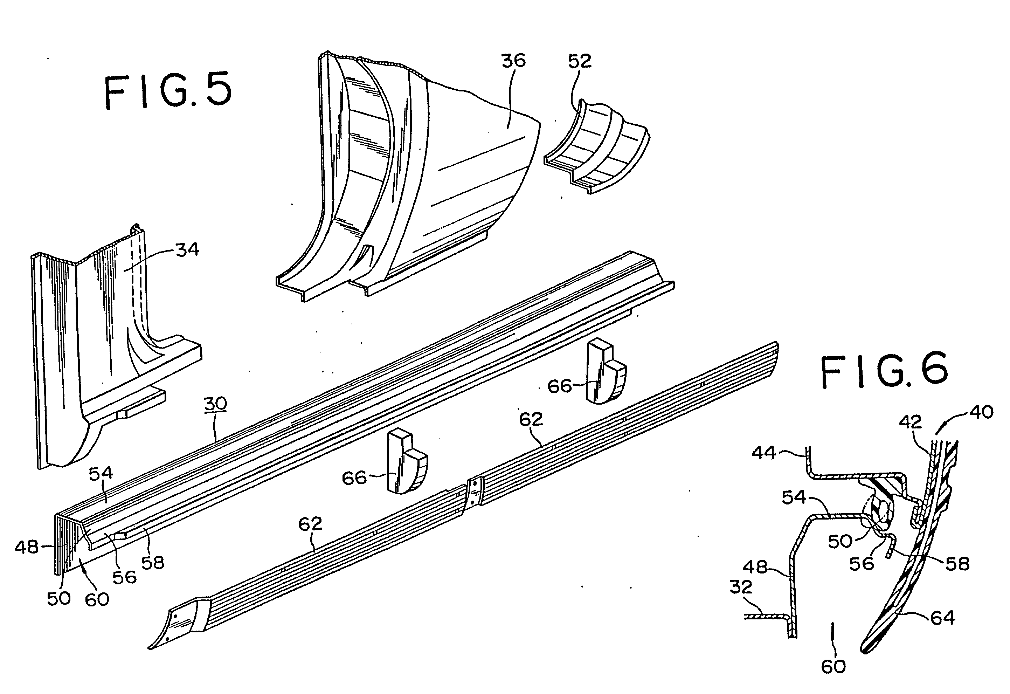

In the embodiment of Fig. 4, the concealing means is shown to comprise a cover 62 which is removably attached with screws to the sill 30 in a manner to define a closed sill configuration. The cover 62 is made of a corrosion-resistant material such as plastics and formed as a finishing or garnish member having, for example, a plurality of parallel grooves on the exterior surface thereof. As shown in Fig. 5, the cover 62 is longitudinally separated into two pieces which are joined at the mating ends when attached to the sill 30, though it may alternatively be one-piece of the same length as the sill.

The vehicle body may further comprise reinforcing means in order to increase the rigidity or stiffness of the sill 30. In Figs. 3 and 4, the reinforcing means is shown to comprise a plurality of reinforcing plates 66 each having a peripheral portion shaped to fit an inner side surface of the sill 30. The reinforcing plates are made of steel and welded to the sill at suitable positions thereof.

From the foregoing, it will be understood that since the sill is an open section, one-piece member according to the present invention, a coating can be easily and assuredly applied to the both side surfaces of the sill when the vehicle body is processed by electrodeposition painting. This imparts a good corrosion-resistant quality to the sill and eliminates the necessity of additionally treating the sill by, for example, applying a rust-proof oil after the process of electrodeposition painting of the vehicle body.

## Claims

1. A process for producing a closed sill configuration for a vehicle body, characterized by the steps of
— shaping the sill as a downwardly and laterally outwardly open section,
— applying a coating to the surfaces of the sill by electrodeposition painting, and
— applying a sill cover being attached removably to the sill in a manner to close the sill.

2. A closed sill configuration produced by the process claimed in claim 1, for a vehicle body comprising a weatherstrip mounted on a pivotal vehicle door to provide a seat between the door and the sill, characterized in that said sill (30) is of a downwardly and laterally outwardly open angle-like section and includes a first upstanding wall section (48) attached at the lower end thereof to a lateral end of the floor panel (32) of the vehicle and a second upstanding wall section (50) spaced laterally outwardly from said first upstanding wall section (48) and forming a sealing surface for said weatherstrip (46), a cover (62) being removably attached to the sill.

3. A closed sill configuration as claimed in claim 2, characterized by at least one reinforcing plate (66) having a peripheral portion shaped to fit a side surface of said sill (30) and attached to said sill to impart a rigidity.

4. A closed sill configuration as claimed in claim 2, characterized by that said second upstanding wall section (50) slightly descends laterally outwardly.

5. A closed sill configuration as claimed in claim 3, characterized by that said sill (30) further includes a substantially horizontal wall section (54) interconnecting the upper ends of said first and second upstanding wall sections (48, 50) and a free end wall section (56) extending laterally outwardly, in a slightly descending manner, from the lower end of said second upstanding wall section to terminate a downwardly turned, short flange (58) depending slightly inwardly.

## Revendications

1. Procédé pour produire un rebord de configuration fermée pour un corps de véhicule, caractérisé par les étapes de
— conformer le rebord en une section ouverte vers le bas et latéralement vers l'extérieur.
— appliquer un revêtement sur la surface du rebord en peignant par électrodéposition, et
— appliquer un couvercle de rebord fixé de façon amovible au rebord de manière à fermer celui-ci.

2. Rebord de configuration fermée produit par le procédé revendiqué en revendication 1, pour un corps du véhicule comprenant une garniture d'encadrement montée sur une porte pivotante du véhicule pour permettre un joint étanche entre la porte et le rebord, caractérisé en ce que ledit rebord (30) est d'une section à angle ouvert vers le bas et latéralement vers l'extérieur et comprend une première section de paroi droite (48) fixée à l'extrémité inférieure de celui-ci, à une extrémité latérale du panneau de plancher (32) du véhicule et une seconde section de paroi droite (50) espacée latéralement vers l'extérieur de ladite première section de paroi droite (48) et formant une surface d'étanchéité pour ladite garniture d'encadrement (46), un couvercle (62) étant fixé de façon amovible au rebord.

3. Rebord de configuration fermée selon la revendication 2, caractérisé par au moins une plaque de renforcement (66) ayant une partie périphérique conformée pour se raccorder à une surface latérale dudit rebord (30) et fixée audit rebord pour donner une rigidité.

4. Rebord de configuration fermée selon la revendication 2, caractérisé en ce que la seconde section de paroi droite (50) précité descend légèrement latéralement vers l'extérieur.

5. Rebord de configuration fermée selon la revendication 3, charactérisé en ce que ledit rebord (30) comprend également une section de paroi (54) sensiblement horizontale interconnectant les extrémités supérieures des première et seconde sections de paroi droite (48, 50) précitées et une section de paroi à extrémité libre s'étendant latéralement vers l'extérieur, d'une manière descendant légèrement, de l'extrémité inférieure de ladite seconde section de paroi droite pour terminer un rebord court (58) tourné vers l'extérieur et s'inclinant légèrement vers l'intérieur.

**Patentansprüche**

1. Verfahren zur Herstellung eines geschlossenen Schwelleraufbaus für eine Fahrzeugkarosserie, gekennzeichnet durch die Verfahrensschritte
— Formen des Schwellers mit einem nach unten und seitlich nach außen offenen Querschnitt,
— Aufbringen einer Beschichtung auf die Oberflächen des Schwellers durch galvanisches Lackieren und
— Anbringen einer Schwellerabdeckung, die derart lösbar an dem Schweller befestigt wird, daß sie diesen abschließt.

2. Geschlossener Schwelleraufbau, hergestellt nach dem Verfahren gemäß Anspruch 1, für eine Fahrzeugkarosserie mit einem an einer schwenkbaren Tür des Fahrzeugs angebrachten, zwischen der Tür und dem Schweller liegenden Dichtungsleiste, dadurch gekennzeichnet, daß der Schweller (30) einen nach unten und seitlich nach außen offenen winkelförmigen Querschnitt aufweist und einen ersten aufragenden Wandabschnitt (48), der mit seinem unteren Ende an einem seitlichen Rand der Bodenwanne (32) des Fahrzeugs befestigt ist, und einen zweiten aufragenden Wandabschnitt (50) umfaßt, der nach außen in seitlichem Abstand zu dem ersten aufragenden Wandabschnitt (48) angeordnet ist und eine Dichtfläche für den Dichtungsstreifen (46) bildet, und daß eine Abdeckung (62) lösbar an dem Schweller befestigt ist.

3. Geschlossener Schwelleraufbau nach Anspruch 2, gekennzeichnet durch wenigstens eine zur Versteifung an dem Schweller angebrachte Verstärkungsplatte (66), die einen der Form der seitlichen Oberfläche des Schwellers (30) angepaßten Umfangsabschnitt aufweist.

4. Geschlossener Schwelleraufbau nach Anspruch 2, dadurch gekennzeichnet, daß der zweite aufragende Wandabschnitt (50) leicht seitlich nach außen hin abfällt.

5. Geschlossener Schwelleraufbau nach Anspruch 3, dadurch gekennzeichnet, daß der Schweller (30) einen die oberen Enden der ersten und zweiten aufragenden Wandabschnitte (48, 50) verbindenden, im wesentlichen waagerechten Wandabschnitt (54) und einen frei tragenden Wandabschnitt (56) umfaßt, der sich leicht abfallend vom unteren Ende des zweiten aufragenden Wandabschnitts aus seitlich nach außen erstreckt und in einem abwärts gebogenen, leicht nach innen zurückspringenden kurzen Flansch (58) endet.

# FIG. I
(PRIOR ART)

10

12

28

14

# FIG. 2
(PRIOR ART)

22

18

10

12

16

20

24

26

28

14

0 0037 587

FIG.3

FIG.4

FIG.5

FIG.6

0037587